# EUROPÄISCHE PATENTSCHRIFT

(11) **EP 0 423 746 B1**
(45) Veröffentlichungstag und Bekanntmachung des Hinweises auf die Patenterteilung: **13.07.1994**
(21) Anmeldenummer: 90119885.3
(22) Anmeldetag: 17.10.1990
(51) Int. Cl.: C07F 9/32, A01N 57/20

(54) **Verfahren zur Herstellung von Methyl-3-carbalkoxyethyl-phosphinsäurealkylestern**
Process for the preparation of methyl-3-carboxyethyl phosphinic acid esters
Procédé de préparation d'esters de l'acide 3-méthyl-carboxy-éthyl phosphinique

(30) Priorität: 20.10.1989 DE 3934916
(43) Veröffentlichungstag der Anmeldung: 24.04.1991
(73) Patentinhaber: Hoechst Schering AgrEvo GmbH, 13342 Berlin (DE)
(72) Erfinder: Knorr, Harald, Dr., W 6000 Frankfurt am Main (DE); Mildenberger, Hilmar, Dr., W-6233 Kelkheim (Taunus) (DE); Nestler, Hans Jürgen, Dr., W-6240 Königstein/Taunus (DE)

(56) Entgegenhaltungen:
- EP-A- 0 113 019

## Beschreibung

Gegenstand der vorliegenden Erfindung ist ein Verfahren zur Herstellung von Verbindungen der Formel I 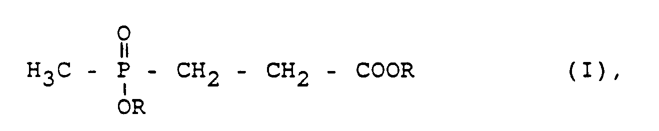
worin R = (C₁-C₄)Alkyl bedeutet, dadurch gekennzeichnet, daß man eine Verbindung der Formel II 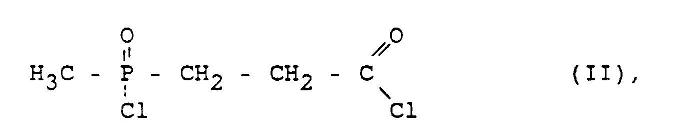
mit einem Alkoholat der Formel III

MeOR (III),

worin Me = Na oder K bedeutet und R die obengenannte Bedeutung besitzt, bei Temperaturen von -30 °C bis + 10 °C umsetzt.

R steht bevorzugt für Methyl und Ethyl.

Bevorzugt ist ein Temperaturbereich von -20 °C bis 0 °C.

R = (C₁-C₄)Alkyl bedeutet Methyl, Ethyl, n-Propyl, iso-Propyl, n-Butyl, sek.-Butyl oder tert.-Butyl.

Die Verbindungen der Formel I sind wichtige Vor- und Zwischenprodukte bei der Synthese herbizidwirksamer Substanzen (EP-A 30424).

Bekannt ist die Umsetzung von strukturell einfachen Phosphinsäurehalogeniden mit Alkoholaten zu den entsprechenden Phosphinsäureestern. Jedoch sind die Ausbeuten, insbesondere wenn man auf den Einsatz inerter Lösungsmittel verzichtet, bei diesen Verfahren unbefriedigend (< 50 %; Houben-Weyl, Methoden der org. Chemie, Band XII/1 (1963) S. 248). Durch Zusatz des Lösungsmittels Benzol können Produktausbeuten von ca. 80 % erzielt werden.

Auch die Herstellung von Phosphinsäureestern I nach anderen Literaturstellen führt zu Ausbeuten, die für den technischen Maßstab als unzureichend gelten müssen. So erhält man beispielsweise nach Chairullin, Sobchuk, Pudovik, Z.obsc.Chim. 37 (1967) Nr. 3, Seite 710-714, engl. S. 660-669 lediglich 32 bis 41 % Produktausbeute. Unter Verwendung von Benzol als Lösungsmittel erhält man mit kaltem Äthanol nur 47 % d.Th. des gewünschten Esters (Chairullin, Vasjanina, Pudovik, Z.obsc.Chim. 39 (1969) Nr. 2, Seite 341-346).

In Gegenwart von Triäthylamin als Hilfsbase fallen die Verbindungen der Formel I nach Chairullin (Doklady Akad. Nauk SSSR 162 (1965) Nr. 4, Seite 827-828) in 50-58 %iger Ausbeute an. Bei der Destillation des rohen Reaktionsproduktes entstehen hochsiedende Anhydride (Z.obsc.Chim. 36 (1966) Nr. 3, Seite 494-498).

Somit müssen die nach den literaturbekannten Verfahren erhaltenen Phosphinsäurealkylester I vor ihrer Weiterverwendung in Folgeumsetzungen zusätzlichen Reinigungsoperationen unterworfen werden. Darüberhinaus sind die in erheblichem Ausmaß angefallenen Nebenprodukte aufzuarbeiten und/oder zu entsorgen, was aus ökonomischer als auch ökologischer Sicht nachteilig zu bewerten ist.

Alle diese geschilderten Nachteile werden beim erfindungsgemäßen Verfahren vermieden, bei dem die gewünschten Produkte I mit Ausbeuten von ≧ 95 % d.Th. und in so hoher Reinheit erhalten werden, daß diese unmittelbar für Folgereaktionen verwendet werden können. Darüberhinaus ist das erfindungsgemäße Verfahren sehr einfach zu handhaben und ist auch für einen kontinuierlichen Betrieb geeignet.

Von den erfindungsgemäß zu verwendenden Alkoholaten III seien beispielsweise genannt Natriumisopropylat, Kalium-tert.-butylat, Natriumbutylat, insbesondere jedoch Natriummethylat und Natriumäthylat.

Die Verbindung der Formel II ist aus Methyldichlorphosphan und Acrylsäure zugänglich (Chairullin, Sobcuk, Pudovik, Z.obsc.Chim. 37 (1967) Nr. 3, Seite 710-714). Die Herstellung der Alkoholate III (bzw. der entsprechenden Alkoholatlösungen) ist dem Fachmann bekannt.

Die Umsetzung der Verbindungen II und III erfolgt im Temperaturbereich von -30 °C bis + 10 °C, vorzugsweise jedoch zwischen -20 °C und 0 °C.

Die Alkoholatmenge, welche zur Herstellung der Verbindung der Formel I benötigt wird, liegt bei mindestens 2 Mol pro 1 Mol Edukt II. Naturgemäß muß die Alkoholatmenge erhöht werden, wenn das eingesetze Edukt der Formel II durch "saure" Nebenkomponenten wie z.B. 2-Methyl-5-oxo-1,2-oxaphospholan-2-oxid (DE-OS 25 31 238) verunreinigt ist, welche selbst mit dem Alkoholat III reagieren können.

Die Alkoholate werden in Form einer alkoholischen Lösung eingesetzt. Zweckmäßigerweise werden dem Reaktionsgemisch noch zusätzliche Mengen des entsprechenden Alkohols zugesetzt. Dieser Alkohol dient als Verdünnungsmittel, damit die Reaktionsmischung bei den erfindungsgemäßen tiefen Reaktionstemperaturen noch rührbar bleibt. Zusätzliche inerte Solventien wie z.B. Benzol werden jedoch nicht benötigt (siehe Beispiele 1-3).

Das erfindungsgemäße Verfahren läßt sich zweckmäßig in der Weise durchführen, daß man die Alkoholatlösung bei -20 °C bis 0 °C vorlegt und das Dichlorid II bei dieser Temperatur zudosiert. Unter Rühren läßt man das Reaktionsgemisch auf Raumtemperatur kommen, filtriert vom ausgefallenen Salz und destilliert die Leichtsieder ab. Das verbleibende Rohprodukt wird dann im Hochvakuum durch Kurzwegdestillation gereinigt. Dabei fallen die Ester der Formel I in Reinheiten von über 97 % (GC) an.

Nachfolgende Beispiele dienen zur näheren Erläuterung der Erfindung:

### Beispiel 1

### Methyl-3-carbomethoxyethyl-phosphinsäuremethylester I

Bei -20 °C werden 339 g (1,883 Mol) Natriummethylatlösung (30 %ig in Methanol) und 200 ml Methanol vorgelegt und innerhalb von 45 Minuten 189 g Methyl-3-chlorcarbonylethyl-phosphinylchlorid (88,4 %ig) zudosiert. Man rührt 30 Minuten bei -20 °C nach und läßt sodann die Reaktionsmischung auf Raumtemperatur kommen. Das Kochsalz (96,5 g) wird abgesaugt, mit wenig Methanol gewaschen und die Mutterlauge eingeengt. Dann erhält man 191,3 g Rohprodukt, aus welchem nochmals 7,8 g Kochsalz ausfallen. Die nach erneuter Filtration erhaltene Mischung setzt sich wie folgt zusammen (GC): 85,6 %ig Produkt I (98,7 % d.Th.), 14,0 %ig Methyl-3-carbomethoxyethylphosphinsäure-Na-Salz, welches aus dem 2-methyl-5-oxo-1,2-oxaphospholan-2-oxid, das als Verunreinigung im Dichlorid II enthalten war, herrührt. Nach Destillation über einen Kurzwegverdampfer bei 0,25 mbar (Manteltemperatur 130 °C) erhält man 159,8 g Produkt der Formel I, welches nach GC 97 %ig ist. Das entspricht einer Produktausbeute von 97.4 % d.Th.. Zusätzlich sind noch 2,5 % Methyl-3-carbomethoxyethyl-phosphinsäure enthalten.

### Beispiel 2

### Methyl-3-carbomethoxyethyl-phosphinsäuremethylester I

Bei -10 °C werden 353 g 30 %ige Natriummethylatlösung (1,96 Mol) und 200 ml Methanol vorgelegt und innerhalb von 45 Minuten 189 g Methyl-3-chlorcarbonylethyl-phosphinylchlorid (96,0 %ig) zudosiert. Man rührt bei -10 °C kurz nach und läßt dann das Gemisch auf Raumtemperatur kommen. Das Kochsalz wird abgesaugt, mit wenig Methanol gewaschen und die Mutterlauge eingeengt. Dann erhält man nach erneuter Filtration von Kochsalz 180,9 g Rohprodukt, welches sich nach GC wie folgt zusammensetzt: 93,6 %ig Produkt I (98,0 % d.Th.), 4,5 %ig Methyl-3-carbomethoxyethylphosphinsäure-Na-Salz. Dieses Produkt kann undestilliert für die Folgereaktion nach EP-A 30424 verwendet werden. Durch Destillation kann jedoch der Anteil des Monoesters weitgehend wie unter Bsp. 1 beschrieben abgetrennt werden.

### Beispiel 3

### Methyl-3-carbäthoxyethyl-phosphinsäureäthylester I

Aus 700 ml absolutem Ethanol wird mit 42,1 g Na Natriumäthylat (1,82 Mol) gebildet. Man kühlt auf -20 °C ab und fügt bei dieser Temperatur innerhalb von 45 Minuten 189 g Methyl-3-chlorcarbonylethyl-phosphinylchlorid (84 %ig) zu. Dann läßt man das Gemisch auf Raumtemperatur kommen und rührt noch 1 Stunde nach. Das Kochsalz wird abgesaugt und die Leichtsieder werden abdestilliert. Es verbleibt ein Rückstand von 193,2 g, welcher 85,9 %ig (95 % d. Th.) Methyl-3-carbäthoxyethyl-phosphinsäureäthylester neben 9,3 % (11,9 d.Th.) Methyl-3-carbäthoxyethyl-phosphinsäure und 4,8 % (6,1 % d.Th.) Methyl-3-carboxyethyl-phosphinsäureethylester enthält. Nach Destillation über einen Kurzwegverdampfer bei 0,3 mbar (Manteltemperatur 140 °C) erhält man 168,5 g Produkt I, welches 98,3 %ig nach GC (silyliert) ist. Das entspricht einer Produktausbeute von 94,8 % d.Th.

### Beispiel 4 (Vergleichsbeispiel)

### Methyl-3-carbomethoxyethylphosphinsäuremethylester I

2,2 Mol Methanol werden unter Rückflußsieden vorgelegt. Man fügt innerhalb von 1 Stunde 189 g (84 %ig) Methyl-3-chlorcarbonyläthyl-phosphinylchlorid hinzu. Es wird heftiges Abgas beobachtet. Es wird noch 30 Minuten nachgerührt. Dann werden die Leichtsieder abdestilliert. Man erhält 172,3 g Rohware, welche laut GC zu 98,6 % aus Methyl-3-carbomethoxyethyl-phosphinsäure bestehen.

### Beispiel 5 (Vergleichsbeispiel)

200 ml Methanol und 2,0 Mol Triäthylamin werden bei 0 °C vorgelegt. Man fügt innerhalb von 1 Stunde 189 g (84 %ig) Methyl-3-chlorcarbonylethyl-phosphinylchlorid der Formel II hinzu, wobei die Temperatur gehalten werden soll. Es bildet sich ein Niederschlag von Triäthylaminhydrochlorid. Man engt ein, filtriert das Salz ab und erhält eine Rohware, welche ca. 52 % d.Th. Methyl-3-carbomethoxyethyl-phosphinsäuremethylester neben 38 % d.Th. Methyl-3-carbomethoxyethyl-phosphinsäure enthält. Zusätzlich sind noch weitere P-haltige Komponenten in der Reaktionsmischung vorhanden.

## Patentansprüche

1. Verfahren zur Herstellung von Verbindungen der Formel I 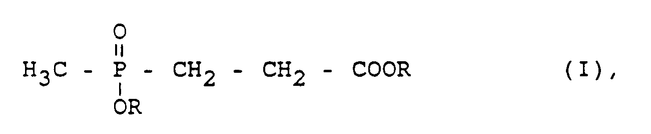 worin R = (C₁-C₄)Alkyl bedeutet, dadurch gekennzeichnet, daß man eine Verbindung der Formel II 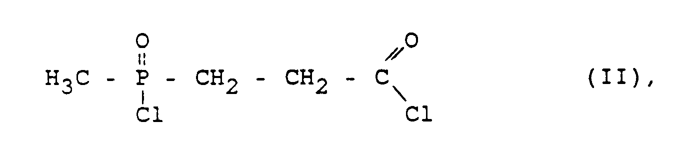 mit einem Alkoholat der Formel III
MeOR (III),
worin Me = Na oder K bedeutet und R die obengenannte Bedeutung besitzt, bei Temperaturen von -30 °C bis + 10 °C umsetzt.

2. Verfahren gemäß Anspruch 1, dadurch gekennzeichnet, daß die Reaktionstemperatur -20 °C bis 0 °C beträgt.

3. Verfahren gemäß Anspruch 1 oder 2, dadurch gekennzeichnet, daß R = Methyl oder Ethyl bedeutet.

## Claims

1. A process for the preparation of compounds of the formula I 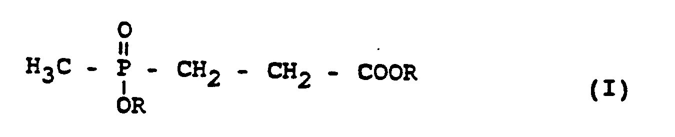 where R is (C₁-C₄)alkyl, which comprises reacting a compound of the formula II 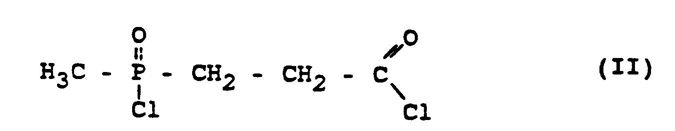 with an alcoholate of the formula III
MeOR (III)
where Me is Na or K and R has the abovementioned meaning, at temperatures from -30°C to +10°C.

2. The process as claimed in claim 1, wherein the reaction temperature is -20°C to 0°C.

3. The process as claimed in claim 1 or 2, wherein R is methyl or ethyl.

## Revendications

1. Procédé de préparation des composés de formule I ci-dessous : 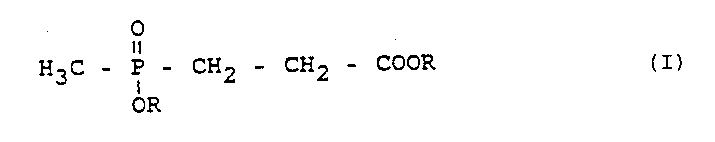 R désignant un alkyle en C₁-C₄, procédé caractérisé en ce que l'on fait réagir le composé de formule II : 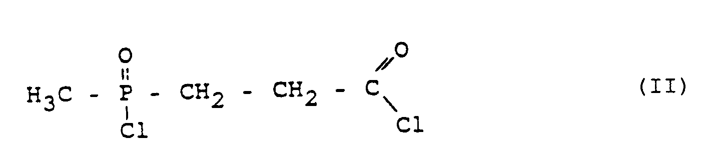 avec un alcoolate de formule III :
MeOR (III)
Me désignant le sodium ou le potassium et R ayant la signification ci-dessus, à des températures de -30 °C à +10 °C.

2. Procédé selon la revendication 1, caractérisé en ce que l'on effectue la réaction à une température comprise entre -20 °C et 0 °C.

3. Procédé selon la revendication 1 ou 2, caractérisé en ce que R est le groupe méthyle ou éthyle.
